# EUROPEAN PATENT APPLICATION

(11) **EP 1 903 698 A2**
(43) Date of publication of application: **26.03.2008**
(21) Application number: 07117184.7
(22) Date of filing: 25.09.2007
(51) Int. Cl.: H04H 60/07

(54) **Method and apparatus for generating digital audio signals including images**

(30) Priority: 25.09.2006 KR 20060092754
(71) Applicant: VDL, 69003 Lyon (FR); SM CNS Corp., Jong-Gu Seoul 110-310 (KR); Kai Media, Seo-gu Daejeon 302-834 (KR)
(72) Inventor: Park, Sang-Gyu, Seo-gu, Daejeon 302-834 (KR)
(74) Representative: Cabinet Plasseraud

(57) **Abstract**

A method and apparatus for generating digital audio signals including images is provided, which can provide audio signals along with images or texts in digital radio broadcasting. The apparatus includes an image format transformer (110) which receives image data and transforms the image data into data having an image input format adequate for video coding; a video coder (120) which receives and codes the transformed image data; an audio coder (130) which receives and codes audio data; and a multiplexer (140) which multiplexes the coded image data and the coded audio data. The apparatus and method can transform image files or text files into data having data formats adequate for video coding, followed by video coding the transformed files, thereby providing image or text data along with audio data in digital radio broadcasting while reducing the cost and time required for generating video content with expensive equipment and facilities.

## Description

### BACKGROUND OF THE INVENTION

### 1. Field of the Invention

The present invention relates to digital broadcasting, and more particularly to a method and apparatus for generating digital audio signals including images, which can provide audio signals along with images or texts in digital radio broadcasting.

### 2. Description of the Related Art

As Digital Multimedia Broadcasting (DMB) is provided, radio broadcasting is also provided in a digital form. The digital multimedia broadcasting and digital radio broadcasting allow viewers or listeners to have high-quality images and radio services.

The digital radio broadcasting may provide the viewers or listeners with text or image data as well as audio data. For example, the Digital Audio Broadcasting (DAB) transfers audio data which is compressed according to MUSICAM (MPEG-1 Layer2) scheme, and transfers image and text data through data channels. Hence, the radio broadcasting can also provide the listeners with the image or text data as well as the audio data.

However, since the above-mentioned MUSICAM scheme has low compression rates, the MUSICAM scheme is not appropriate in terms of frequency use efficiency in the case of providing multiple radio channels at the same time.

Korean Laid-Open Patent Application No. 2006-84610 discloses a method for visual radio broadcasting. According to the method, audio signals are compressed and coded according to the BSAC (Bit Sliced Arithmetic Coding) scheme, which has higher compression rates than the MUSICAM scheme, video signals are compressed and coded according to H.264 standard, and the coded audio and video data are multiplexed.

According to this method, still images are displayed at regular intervals in displaying image information since the image information is coded to Instantaneous Decoding Refresh (IDR) picture. That is, the listeners can view still images which change at regular intervals, while listening to the audio signals.

In the above-mentioned method, however, image content has to be produced in order to input the video signals, which needs expensive studio apparatus, video-editing apparatus, screen-data input apparatus, etc. Hence, digital radio broadcast stations may require a large expense for equipment and perform complex production procedures to provide image or text information along with audio information.

### SUMMARY OF THE INVENTION

Therefore, the present invention has been made in view of the above problems, and an object of the present invention is to provide a method and apparatus for generating digital audio signals including images, which receives image data in the form of image files or text files rather than in the form of conventional video stream data, transforms the image data into data having a format adequate for video coding, compresses and codes the transformed image data, and multiplexes the coded image data together with audio data such that the multiplexed image and audio data can be used in digital radio broadcasting, which displays the image along with the audio data.

Additional features of the invention will be set forth in the description which follows, and in part will be apparent from the description, or may be learned by practice of the invention.

The present invention discloses an apparatus for generating digital audio signals including images, including: an image format transformer which receives image data and transforms the image data into data having an image input format adequate for video coding; a video coder which receives and codes the transformed image data; an audio coder which receives and codes audio data; and a multiplexer which multiplexes the coded image data and the coded audio data.

The present invention also discloses a method of generating digital audio signals including images, including: receiving image data along with audio data; transforming the image data into the data having an image input format adequate for video coding; coding the audio data and the transformed image data; and multiplexing the coded audio and the coded image data.

It is to be understood that both of the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.
Fig. 1 is a block diagram of an apparatus for generating digital audio signals including images according to an exemplary embodiment of the present invention;
Figs. 2A and 2B illustrate exemplary display screens of audio broadcasting including images generated according to an exemplary embodiment of the present invention; and
Fig. 3 is a flow chart of a method for generating digital audio signals including images according to an exemplary embodiment of the present invention.

### DETAILED DESCRIPTION OF THE INVENTION

Exemplary embodiments of the present invention are described in detail with reference to the accompanying drawings hereinafter.

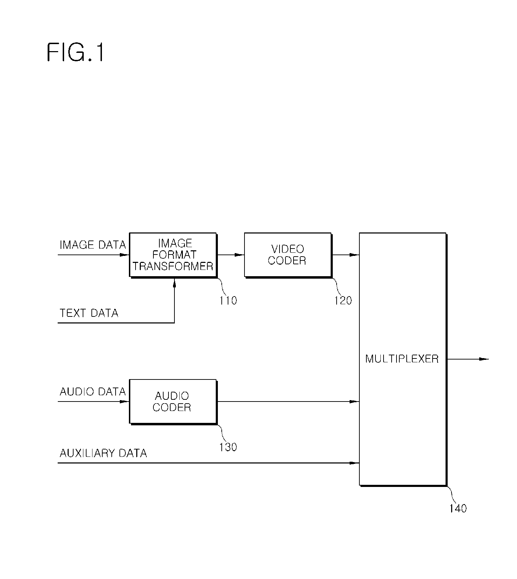

Fig.1 is a block diagram of an apparatus for generating digital audio signals including images according to an exemplary embodiment of the present invention.

Referring to Fig. 1, the apparatus includes an image format transformer 110, a video coder 120, an audio coder 130, and a multiplexer 140.

The image format transformer 110 receives image data and transforms it into data having a video input format adequate for conducting video coding. More particularly, in the image format transformer 110, the image data is inputted in the form of still picture files such as jpg, bmp or gif, and parsed to be transformed into data having a video input data format adopted in an input for the video coder 120. In other words, since the video coder 120 receives video data as its input, the image format transformer 110 transforms the image data of the inputted picture files into data having the video data format such as YUV format.

On the other hand, text information such as an additional explanation for images and a real-time notice may be transferred along with the image information. For this purpose, the image format transformer 110 can further selectively receive text data as well as image data. In this case, for example, the text data can be overlaid on the image data to form integrated image data, which in turn is transformed into data having the video input data format adequate for the video coding. Apart from the overlaying, other methods may be employed to combine the text data with the image data.

The picture files used for inputting the image data and the text files used for inputting the text data may be created previously, or may be created and inputted in real time by means of other authoring tools. That is, the text data generated in real time by managers can be inputted to the image format transformer 110 to provide traffic conditions or news in real time.

The video coder 120 serves to code the image data transformed by the image format transformer 110. According to one exemplary embodiment of the present invention, the video compressing/coding is conducted according to the H. 264 video coding process. However, other well-known video compressing/coding standards may be used. In the case of using the H.264 video coding process, the image data is compressed and coded by the instantaneous decoding refresh (IDR) picture type that does not use a correlation with neighboring images, and an equal quantization value is used within a block in order to guarantee a homogeneous picture quality on one screen.

The audio coder 130 receives and codes the audio data. For example, the audio coder 130 compresses and codes the input audio data according to the HE-AAC audio coding method or the BSAC audio coding method. Other audio coding methods may be used to code the audio data.

The multiplexer 140 multiplexes the coded video and audio data into MPEG-2 Transport Streams. The multiplexer can further receive auxiliary data in addition to the audio and video data and multiplex all the data together. The well-known MPEG multiplexing method may be used to multiplex the data, and the coded audio and video data are time-synchronized by use of time stamp.

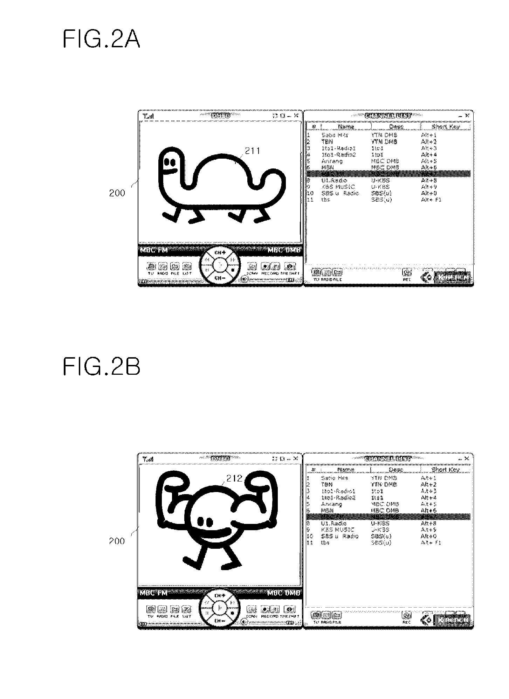

Figs. 2A and 2B show exemplary display screens of audio broadcasting including images generated according to one exemplary embodiment of the present invention.

When digital radio broadcasting is received, each image 211 or 212 is also displayed on a window 200 for image display. The images 211 and 212 may be updated at regular intervals. At this time, the images are data stored in the form of picture files rather than in the form of video content produced in studios.

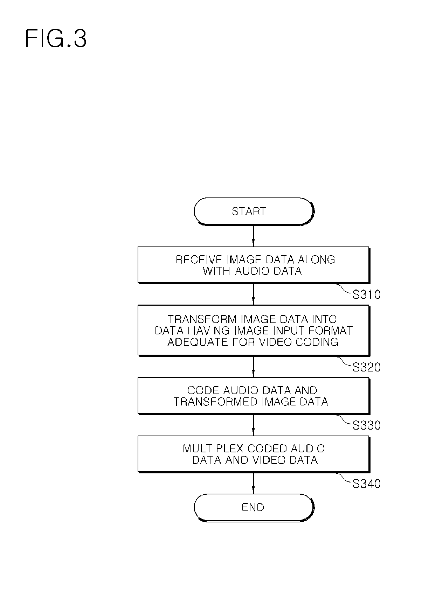

Fig. 3 is a flow chart of a method of generating digital audio signals including images according to an exemplary embodiment of the present invention.

First, image data is inputted along with audio data (S310). The image data is inputted in the form of picture files as described above. Then, the input image data is transformed into data having an image input format adequate for video coding (S320). By such transformation of the image data format, the picture files are transformed into data having YUV format that can be used as input data for the video coding as described above.

Text data may be further inputted and added to the input image data, which may be then transformed into the data having the image input format adequate for the video coding.

Next, the input audio data and the transformed image data are compressed and coded (S330), and the coded audio and video data are multiplexed to be output as MPEG-2 Transport Streams (S340). The methods for coding and multiplexing the audio and video data are described above with reference to Fig. 1.

The above-mentioned method according to the exemplary embodiments of the invention may be stored in any form of recording media, such as CD-ROM, RAM, ROM, floppy disk, hard disk, or magneto-optical disk, or in any computer-readable form, such as computer code organized into executable programs. Methods of storing an exemplary embodiment of the present invention are well known in the art and thus descriptions will be omitted.

The apparatus and method according to the present invention can transform image files or text files into data having data formats adequate for video coding, followed by video coding the transformed files, thereby providing image or text data along with audio data in digital radio broadcasting, while reducing the cost and time required for generating video content with expensive equipment and facilities.

It will be apparent to those skilled in the art that various modifications and variation can be made in the present invention without departing from the scope of the invention. Thus, it is intended that the present invention covers the modifications and variations of this invention provided they come within the scope of the appended claims and their equivalents.

## Claims

1. An apparatus for generating digital audio signals including images, comprising:
an image format transformer (110) which receives image data and transforms the image data into data having an image input format adequate for video coding;
a video coder (120) which receives and codes the transformed image data;
an audio coder (130) which receives and codes audio data; and
a multiplexer (140) which multiplexes the coded image data and the coded audio data.

2. The apparatus according to claim 1, wherein the image format transformer (110) further receives text data, adds the text data to the image data, and transforms the image data with the text data added into data having an image input format adequate for the video coding.

3. The apparatus according to claim 1 or 2, wherein the image format transformer (110) receives and parses an image file, and transforms the image data into data having an image input format adequate to be input to the video coder (120).

4. The apparatus according to claim 3, wherein the image input format is a YUV format.

5. The apparatus according to claim 1, wherein the video coder (120) codes the image data using an equivalent quantization value for each block which constitutes the image.

6. The apparatus according to claim 1, wherein the video coder (120) compresses and codes the image data according to H.264 standard, and the multiplexer (140) outputs the multiplexed image data in MPEG Transport Stream.

7. A method of generating digital audio signals including images, comprising:
receiving image data along with audio data;
transforming the image data into data having an image input format adequate for video coding;
coding the audio data and the transformed image data; and
multiplexing the coded audio and the coded image data.

8. The method according to claim 7, wherein transforming the image data comprises further receiving text data, adding the text data to the image data, and transforming the image data with the text data added into data having an image input format adequate for the video coding.

9. The method according to claim 7 or 8, wherein transforming the image data comprises receiving and parsing an image file and transforming the image data into data having an image input format adequate to be used in coding the audio data and the transformed image data.

10. The method according to claim 9, wherein the image input format is a YUV format.
